# EUROPEAN PATENT APPLICATION

(11) **EP 4 811 132 A1**
(43) Date of publication of application: **23.09.2026**
(21) Application number: 25382263.9
(22) Date of filing: 20.03.2025
(51) Int. Cl.: G06F 9/50, H04L 12/46, H04L 9/40

(54) **ALLOW MULTIPLE IP ADDRESSING USING A VPN SERVER FOR COMMUNICATION BETWEEN VIRTUAL MACHINES**

(71) Applicant: Siemens Rail Automation S.A.U., 28760 Tres Cantos (Madrid) (ES)
(72) Inventor: Ramirez Moya, Santos, 28830 San Fernado de Henares (Madrid) (ES); Ramirez Garcia, Jorge, 28806 Madrid (ES); Sanz Fernandez, Javier, 28025 Madrid (ES)
(74) Representative: Siemens Patent Attorneys

(57) **Abstract**

There is described a method of managing a virtual machine, VM, system (100) comprising a network (180), the method comprising:
i) providing a first VM (110) and a second VM (120);
ii) providing a virtual private network, VPN, server VM (150); and
iii) communicating between the first VM (110) and the second VM (120) via the VPN server VM (150) in a subnetwork (140) within the network (180).

## Description

### Field of the Invention

The invention refers to a method of managing a virtual machine (VM) communication in a network, the method comprising: creating a first VM, a second VM, and a virtual private network (VPN) server VM; providing, by the VPN server VM, a subnetwork between the first VM and the second VM; and communicating between the first VM and the second VM via the subnetwork within the network. The invention further relates to a system for performing said method and to a use of a VPN server VM to allow using any IP addressing to communicate between different VM.

The invention can hence relate to the technical field of organizing virtual machines.

### Technical Background

A virtual machine (VM) is a software-based emulation of a physical computer that runs an operating system and applications. VMs allow multiple operating systems to run on a single physical machine, each operating in an isolated environment. VMs are generally created using a software called a hypervisor that allocates the host system's resources (such as CPU, memory, and storage) to the virtual machines. Even though different VMs are independent and separated of each other, they can be coupled to a common network, e.g. a virtual local area network (VLAN) or a cloud network.

In a test application, it can be necessary to execute a group of virtual machines, e.g. with identical software (application and operating system), data, and configuration to check the correct behavior of software, data, and configuration. The objective is to test in a virtual environment the real software, data, and configuration before installing it in real hardware. For such a virtual environment, a cloud environment such as a virtual private cloud (VPC) (for example AWS, Azure, etc.) or an on-premises environment (e.g. vSphere, Proxmox, etc.) can be used.

Hereby, it can be required that applications are checked without changing the configuration (like IP addresses). In other words, the IP addresses are considered as part of configuration, and this cannot be changed. Many virtual environments supply a network between different virtual machines on Level 3 (ISO/OSI Network Level) and not on Level 2 (ISO/OSI Link Level). Hence, it is not possible to use any IP addressing (scheme) inside virtual machines to communicate between each other.

While in a Level 2 network any IP addressing can be used, in a Level 3 network, one can only use the IP addressing as a subnetting of the pre-defined IP subnetwork (predefined IP addressing scheme). For example: if the VPC in AWS is 172.16.0.0/16, one can only use the IP addressing scheme 172.16.X.X, so it is not possible to communicate between different VMs with another IP addressing scheme.

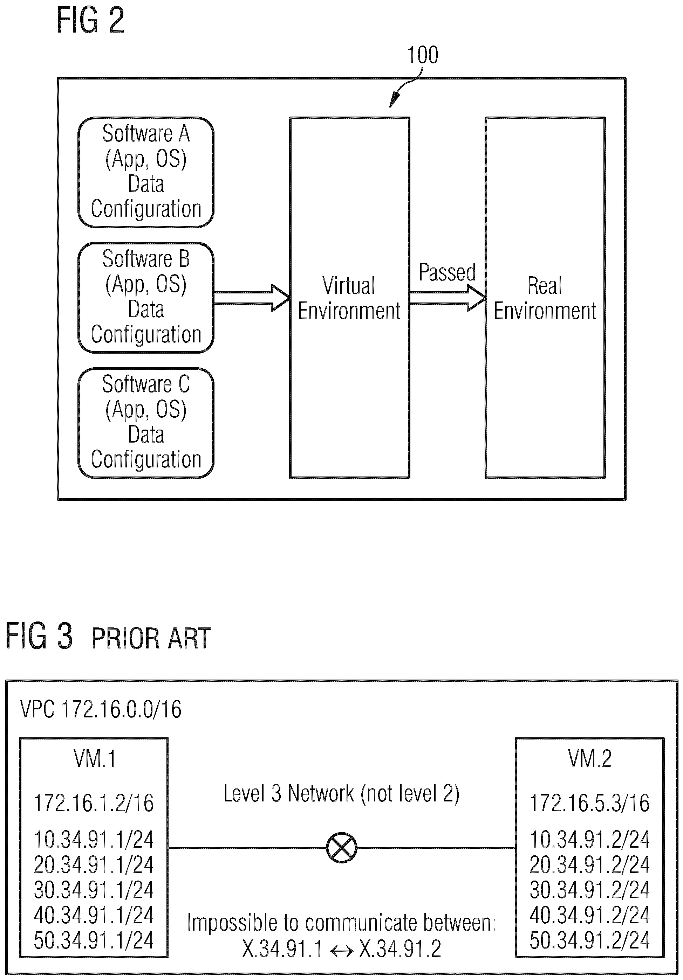

A conventional example is illustrated in **Figure 3** that shows two VMs in a conventional virtual private cloud network: it is not possible to communicate with other IP addressing (e.g. X.34.91.1) outside the VPC.

### Summary of the invention

There may be a need to enable efficient communication between virtual machines in a network, in particular with respect to different IP addressing schemes.

A method, a system, and a use are described in the following.

According to a first aspect of the invention, there is described a method of managing a virtual machine (VM) system with a network (e.g. one or more networks), the method comprising:
i) providing (e.g. creating/starting/launching) a first VM and providing a second VM (notably a plurality of VMs, in principle not limited);
ii) providing (e.g. creating/starting/launching) a virtual private network (VPN) server VM; and
iii) providing, by the VPN server VM, a subnetwork (in particular two or more subnetworks) (notably for communication) between the first VM and the second VM (notably within the network).

According to a second aspect of the invention, there is described a virtual machine (VM) (network) system, in particular comprising at least one processor, and configured (notably using the at least one processor) to perform the method as described above.

According to a third aspect of the invention, there is described a use (or a method of using) of a VPN server VM to provide in a network a subnetwork between a first VM and a second VM, in particular wherein the network comprises a network IP addressing scheme, and wherein the network IP addressing scheme is different from the IP addressing scheme of the first VM and the second VM (in said subnetwork) (notably to allow using any IP addressing to communicate between different VM).

According to an aspect of the invention, there is described a use (or a method of using) of a virtual private network (VPN) server virtual machine (VM) to configure, upon request, in a network, a first IP address for a first VM and a second IP address for a second VM, so that communication between the first VM and the second VM via a subnetwork (in particular via a VPN server provided by the VPN server VM) within the network is enabled.

In the context of the present document, the term "VM system" may in particular refer to a hardware/software configured to manage a plurality of VMs. For example, a VM system may comprise a physical machine (e.g. with at least one processor) to run a software configured to create/run a plurality of VMs. A VM system may be implemented for example as a cloud environment (in particular a hybrid cloud environment) or an on-premises environment. The VM system may be organized in one location or may be distributed over a plurality of locations.

In the context of the present document, the term "VPN server VM" may in particular refer to a VM configured with a VPN server functionality. A VPN server may a server that enables a virtual private network connection. In general, a VPN server may allow remote users or devices to securely connect to a private network over a public network (e.g. the internet). The VPN server may provide a secure channel/tunnel for communication. In a VM application, the VPN server may provide a secure channel for communication between VMs, in particular between network interfaces of said VMs. The VPN server may use the IP addresses of the (network interfaces of the) VMs, and configure these to establish the communication, in particular in a subnetwork. In an embodiment, the VPN server VM is configured to provide a plurality of VPN servers/services, one for each subnetwork. In an embodiment, a VM may be connected to the VPN server VM by a VPN client. In an embodiment, the VPN server VM may provide a network interface, in particular a plurality of network interfaces, to a VM.

In the context of the present document, the term "IP addressing scheme" may in particular denote an applied/supported IP addressing. For example, a network may apply 172.16.X.X as IP addressing scheme, so that only IP addresses with the same IP address scheme (like 172.16.1.2 and 172.16.5.3) can communicate in the network. In another example, VMs may use a different IP addressing scheme, e.g. 10.34.91.X. In an embodiment, the network comprises a predefined network IP addressing scheme. In an embodiment, the network IP addressing scheme is different from an IP addressing scheme of the first VM and the second VM. In other words, the VMs cannot communicate with their IP addresses within the network. This drawback may be overcome with the described method and without changing the IP addresses of the VMs. In an embodiment, the invention allows using arbitrary IP addressing to communicate between different VM.

According to an exemplary embodiment, the invention may be based on the idea that an efficient communication between virtual machines in a network, in particular with respect to different IP addressing schemes, may be provided, when a VPN server VM is used to enable communication between a first VM and a second VM via a subnetwork within the network. Before establishing the subnetwork (e.g. via a VPN service), the VPN server VM may configure/assign, upon request by the VMs, a first IP address for the first VM and a second IP address for the second VM. The VPN server VM may thus provide a communication channel between (network interfaces of) VMs with the same IP addressing scheme in a subnetwork.

As described above, conventionally one cannot use any IP addressing for a communication between different virtual machines in cloud networks (such as AWS or Azure), however, this can be required for many applications, e.g. testing software without changing IP configuration. With the method described above, the VMs can communicate with each other even though their IP addresses are not changed and their IP addressing scheme does not comply with the predefined IP addressing scheme of the network.

Furthermore, the VPN server VM may provide additional advantages options. For example, another problem of conventional cloud networks may be that the number of network interfaces for the VMs is very limited (e.g. to two), while there is software (e.g. to be tested) that needs ten or more network interfaces. With the method described above, the VPN server VM may create as many network interfaces per VM as needed/required. This may be implemented e.g. based on an IP address configuration and a connection to the VPN server VM via a VPN client.

The described approach may be highly efficient and robust and may be used in a large variety of systems, for example each system with an IP-network context may be applied.

In an embodiment, the invention may allow to have any arbitrary IP addressing or any IP addressing between different virtual machines in a cloud where this (arbitrary) IP addressing is not possible, for example AWS, Azure, etc.

### Exemplary Embodiments

In an embodiment, the network comprises a, preferentially predefined, network IP addressing scheme. In an embodiment, the network IP addressing scheme is different from the IP addressing scheme of the first VM and the second VM, notably in the subnetwork. The IP addressing scheme of the first VM and the second VM may be any IP addressing scheme. In an embodiment, the first VM and the second VM apply the same IP addressing scheme.

In an embodiment, the method comprises: communicating between the first VM and the second VM via the VPN server VM, notably through the subnetwork.

In an embodiment, the method further comprises at least one of:
i) requesting (e.g. asking for), notably by the first VM, a first IP address configuration/assignment at the VPN server VM (in particular based on a first IP address of the first VM);
ii) providing, notably by the VPN server VM, the first IP address configuration to the first VM;
iii) requesting (e.g. asking for), notably by the second VM, a second IP address configuration/assignment at the VPN server VM (in particular based on a second IP address of the second VM);
vi) providing, notably by the VPN server VM, the second IP address configuration to the second VM;
v) communicating between the first VM and the second VM in the (first) subnetwork (in particular via a VPN server provided by the VPN server VM) within the network using the first IP address configuration and the second IP address configuration.

Thereby, an efficient and reliable VM management may be enabled. The subnetwork may be established based on the first IP configuration and the second IP configuration done by the VPN server VM.

In an embodiment, the method further comprises providing, notably by the VPN server VM, at least one first network interface for the first VM. Preferably, the number of first network interfaces is not limited (i.e. can be as many as needed). In an embodiment, the method further comprises providing, notably by the VPN server VM, at least one second network interface for the second VM. In an embodiment, the number of second network interfaces is not limited. This may provide the advantage that as many network interfaces as needed per VM can be used. In an example, the network interface may comprise an ethernet adapter (TAP).

In an embodiment, providing the first network interface is based on the first IP address configuration. In an embodiment, providing the second network interface is based on the second IP address configuration. Using a specific IP address configuration, and preferentially a respective VPN client, a network interface with said IP address can be created.

In an embodiment, the method further comprises providing, notably by the VPN server VM, a VPN server/service (in particular one VPN server for each subnetwork). In an embodiment, the method further comprises communicating between the first VM (in particular the first network interface) and the second VM (in particular the second network interface) via the VPN server in the subnetwork within the network.

In an embodiment, the VPN server VM starts or provides the VPN server on a free network port, in particular a TCP port. Thereby, a plurality of VPN server may be provided in an efficient manner. The term "port" may in particular refer to a (virtual/logical) endpoint. A TCP port may be a specific type of port used in the Transmission Control Protocol (TCP), which is one of the core protocols in the IPs.

In an embodiment, the method further comprises providing, notably by the VPN server VM, at least one further first network interface for the first VM. In an embodiment, the method further comprises providing, notably by the VPN server VM, at least one further second network interface for the second VM. In an embodiment, the method further comprises providing, notably by the VPN server VM, a further VPN server. In an embodiment, the method further comprises communicating between the further first network interface and the further second network interface via the further VPN server in a further subnetwork within the network. This may provide the advantage that a plurality of subnetworks can be applied in an efficient manner. For example, for the network interfaces with the same IP addressing scheme, an associated subnetwork may be provided, organized by a corresponding VPN server.

In an embodiment, the first network interface comprises the first IP address, in particular a first IP addressing scheme, and/or the further first network interface comprises a further first IP address, in particular a further IP addressing scheme, being different from the first IP address (scheme). In an embodiment, the second network interface comprises the second IP address, in particular a second IP addressing scheme, and/or the further second network interface comprises a further second IP address, in particular a further second IP addressing scheme, being different from the second IP address (scheme). Even though there are different IP addressing schemes, and preferentially corresponding network interfaces, in each VM, they can be communicatively coupled individually with corresponding IP addressing schemes of other VMs.

In an embodiment, the method further comprises starting a first VPN client, notably at the first VM, based on the first IP address configuration. In an embodiment, the method further comprises: starting a second VPN client, notably at the second VM, based on the second IP address configuration. The VPN client may be used to connect the respective VM to the VPN server VM. In this manner, network interfaces may be provided and used in an efficient manner.

In an embodiment, the method further comprises: providing a first deployment in the network, wherein the first deployment comprises the first VM, the second VM, and the VPN server VM. In an embodiment, the method further comprises providing a second deployment in the network, wherein the second deployment comprises a further first VM, a further second VM, and a further VPN server VM. Using deployment/clustering, projects/workload may be organized/scaled in an efficient manner. In an embodiment, the IP addresses in the first deployment and in the second deployment are different or (at least partially) similar. Each deployment may apply the method as described above. In an embodiment, each deployment comprises its own VPN server VM.

In an embodiment, the method further comprises providing a further network. In an embodiment, the method further comprises providing a further first deployment and a further second deployment in the further network. These measures may improve organization and scalability of projects. In an embodiment, the networks, and preferentially their deployments, may be organized similar or different.

In an embodiment, the first IP address (network interface of first VM) and the second IP address (network interface of second VM) have the same IP addressing scheme. In an embodiment, the further first IP address (further network interface of first VM) and the further second IP address (further network interface of second VM) have the same further IP addressing scheme. In an embodiment, the IP addressing scheme is different from the further IP addressing scheme. Thus, different network interfaces of a VM may communicate with corresponding network interfaces of another VM respectively.

In an embodiment, the first VM comprises the first IP address. In an embodiment, said first IP address remains unchanged (notably during applying the method). In an embodiment, the second VM comprises the second IP address. In an embodiment, said second VM address remains unchanged. In an embodiment, the network is a cloud network, in particular a virtual private cloud, VPC. In an embodiment, the network is a VLAN communication network. In an embodiment, the network is a level 3 network. In an embodiment, the network is an IP network. In an embodiment, the method comprises starting a new VPN server at a free network port, in particular a free TCP port.

In an embodiment, the VPN server VM applies a commonly available VPN software. This may provide the advantage that the VPN server may be implemented in a straightforward manner, using established techniques. In an embodiment, the VPN software may be commercially available. In another embodiment, the VPN software may be freeware, for example OpenVPN.

In an embodiment, the at least one VM comprises at least one network interface, in particular each VM of the plurality of VMs comprises at least one network interface. In an embodiment, the network interface is an interface to a common or a private network. In an embodiment, the network interface is an ethernet interface/adapter. In an embodiment, a VM comprises a first network interface for a common network and/or a second network interface for a private network.

In an embodiment, the plurality of VMs are coupled (in particular via the individual network interfaces) to a common network, in particular a common VLAN, and/or to a private network, in particular a private VLAN. In an embodiment, at least two VMs of the plurality of VMs are further coupled, in particular via further individual network interfaces, to a private network. The common network may enable communication of (each of) the VM with the data storage entity, and preferentially a configuration entity. The private network in turn may enable exclusive communication between specific VMs; e.g. a private network may be formed for a common project.

In an embodiment, the VM system comprises at least one of: a cloud environment, an on-premises environment, a hybrid cloud environment (e.g. a mixture of a common and a private cloud/network). This may provide the advantage that the described VM system may be implemented in a flexible manner in a variety of important applications.

In an embodiment, the VM system entity comprises at least one hypervisor, in particular to create the two or more deployments/clusters.

According to an exemplary embodiment, the system starts a new deployment environment with different types of virtual machines, different OS can be supported (for example Windows, Linux, FreeBSD, etc).The system starts (for any isolated environment launched) a single VM with the role of a VPN server. This is the virtual machine, where the VPN services shall be started, one VPN service for each subnetwork requested/required. For example, if there are twenty different subnetworks, the VPN server VM shall start inside twenty VPN services (VPN servers). Each VPN service is for one subnetwork, can use a different (TCP) port, and manage the IP addresses (IP address configurations) for said subnetwork.

According to an exemplary embodiment, the method can comprise the following steps:
VM.1
   - ask 10.1.1.1/24 (first IP address), receive client.config.10.1.1.1.vpn (first IP address configuration), start (VPN) client and virtual NIC (network interface card) 10.1.1.1 (first network interface) is created.
   - ask 20.1.1.1/24 (further first IP address), receive client.config.20.1.1.1.vpn (further first IP address configuration), start client and virtual NIC 20.1.1.1 (further first network interface) is created.
   - ask 30.1.1.1/24, receive client.config.30.1.1.1.vpn, start client and virtual NIC 30.1.1.1 is created.
VM.2
   - ask 10.1.1.2/24 (second IP address), receive client.config.10.1.1.2.vpn (second IP address configuration), start client and virtual NIC 10.1.1.2 (second network interface) is created.
   - ask 20.1.1.2/24 (further second IP address), receive client.config.20.1.1.2.vpn (further second IP address configuration), start client and virtual NIC 20.1.1.2 (further second network interface) is created.
   - ask 30.1.1.3/24, receive client.config.30.1.1.3.vpn, start client and virtual NIC 30.1.1.3 is created.

Optional: ask 192.168.0.5/24, receive client.config.192.168.0.5.vpn, start client and virtual NIC 192.168.0.5 is created.

### VM.n

### Further VMs can perform similar processes.

In an embodiment, the process can be summarized by the following loop:
- send a request to the VPN Server VM for an IP address configuration and a subnetwork (mask) and wait for the configuration file.
- when configuration file is received, a new VPN client process is started using the received configuration file.
- when the VPN client process starts, a new virtual NIC (network interface) is created with the IP address supplied inside the configuration file.
- End Loop.

According to an exemplary embodiment, the method can comprise the following steps at the VPN server VM:
- Receive request 10.1.1.1/24 from VM.1, launch new (first) VPN server/service on new port 50001 for subnetwork 10.1.1.0/24 (first subnetwork), send client.config.10.1.1.1.vpn.
- Receive request 20.1.1.1/24 from VM.1, launch new (second) VPN server/service on new port 50002 for subnetwork 20.1.1.0/24 (second subnetwork), send client.config.20.1.1.1.vpn.
- Receive request 30.1.1.1/24 from VM.1, launch new (third) VPN server/service on port 50003 for subnetwork 30.1.1.0/24 (third subnetwork), send client.config.30.1.1.1.vpn.
- Receive request 10.1.1.2/24 from VM.2, use first VPN service ready on port 50001 for first subnetwork 10.1.1.0/24, send client.config.10.1.1.2.vpn.
- Receive request 20.1.1.2/24 from VM.2, use second VPN service ready on port 50002 for second subnetwork 20.1.1.0/24, send client.config.10.1.1.2.vpn.
- Receive request 30.1.1.3/24 from VM.2, use third VPN server/service ready on port 50003 for third subnetwork 30.1.1.0/24, send client.config.30.1.1.3.vpn.

Optional: Receive request 192.168.0.5/24, launch new VPN service on port 50005 for subnetwork 192.168.0.5/24, send client.config.192.168.0.5.vpn.

In summary, IP addresses with IP addressing scheme 10.1.1.X can communicate in the first subnetwork via the first VPN server, while IP addresses with IP addressing scheme 20.1.1.X can communicate in the second subnetwork via the second VPN server.

In an embodiment, the process can be summarized by the following loop:
- await client request for IP address configuration and subnetwork mask.
- if the subnetwork has a VPN server running, use this VPN server and its port.
- if the subnetwork has not a VPN server running, create/execute a new VPN server on a new port.
- use the subnetwork, the VPN server and the port for creating a VPN client configuration file.
- send back to client created configuration file.
- End Loop.

In an exemplary embodiment, the VPN server VM requirements may depend on the number of different subnetworks to be used. A new VPN process may be launched for each different subnetwork. For example, 64 different subnetworks may be used (in case on AWS) with t3.medium instance with 2 vCPUs, 4.0 GiB of memory and up to 5 Gibps of bandwidth.

It should be noted that embodiments of the invention have been described with reference to various subject-matters. In particular, some embodiments have been described with reference to method claims, while other embodiments have been described with reference to apparatus claims. However, a skilled person will infer from the foregoing and the following description that, unless otherwise indicated, in addition to any combination of features belonging to one type of subject-matter, any combination of features relating to different subject-matter is also considered to be disclosed by this document. This is particularly the case between features of the method claims and features of the apparatus claims.

The aspects defined above and further aspects of the present invention result from the examples of embodiments to be described below and are explained by reference to the examples of embodiments. The invention is described in more detail below with reference to embodiments to which the invention is not limited.

### Brief Description of the Drawings

Figure 1 shows a method of managing a virtual machine system, according to an exemplary embodiment of the invention.
Figure 2 shows a specific application of the VM managing method, according to an exemplary embodiment of the invention.
Figure 3 shows conventional virtual private cloud network.
Figure 4 shows a VM network with a plurality of subnetworks provided by the VPN server VM, according to an exemplary embodiment of the invention.
Figure 5 shows a VM network with deployments, according to an exemplary embodiment of the invention.
Figure 6 shows a plurality of VM networks with respective deployments, according to an exemplary embodiment of the invention.

### Detailed Description of the Drawings

The representations in the drawings are schematic. It should be noted that in different illustrations, similar or identical elements or features are provided with the same reference signs or with reference signs that differ from the corresponding reference signs only within the first digit. In order to avoid unnecessary repetition, elements or features that have already been explained in relation to a previously described embodiment are not explained again at a later point in the description.

In addition, spatially relative terms such as "front" and "back", "up" and "down", "left" and "right", etc. are used to describe the relationship of one element to another element, as shown in the figures. For example, the spatially relative terms can apply to orientations used that deviate from the orientation shown in the figures. Obviously, these spatially relative terms refer only to a simplification of the description and the orientation shown in the figures and are not necessarily limiting, since an apparatus according to an embodiment of the invention may assume orientations other than those shown in the figures, in particular when it is used.

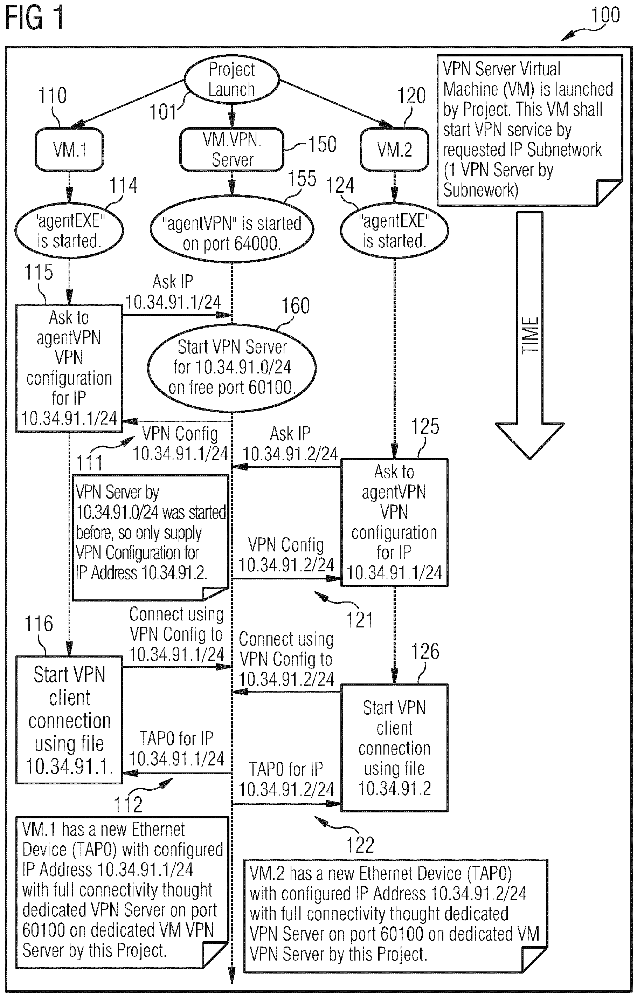

**Figure 1** shows a method of managing a virtual machine network/system 100, according to an exemplary embodiment of the invention. A project is started/launched by a user, e.g. using a hypervisor 101 to create a plurality of VM. In the following, the use of two VM is described. Yet, the number of VM may not be limited and actually quite high.

In the first place, there is creating a first VM 110, a second VM 120, and a virtual private network (VPN) server VM 150. Then, the first VM 110 (agent) is started 114, the second VM 120 (agent) is started 124, and the VPN server VM 150 (agent) is started 155 on a port. Communication between the first VM 110 and the second VM 120 in the network system 100 is desired, but not possible, because the network (e.g. a VPC) has an IP addressing scheme (e.g. 172.16.0.0) different from the IP addressing schemes of the first VM and the second VM (10.34.91.X).

The first VM 110 sends a request 115 to the VPN server 150 for a first IP address configuration 111 for the first IP address. In return, the VPN server 150 provides a VPN server/service 160 for the corresponding first IP addressing scheme on a free port. Then, the VPN server VM 150 creates and provides the first IP address configuration 111 to the first VM 110. The second VM 120 sends a request 125 to the VPN server 150 for a second IP address configuration 121 for the second IP address. The second IP address has the same IP address scheme as the first IP address. Therefore, the VPN server VM does not create a new VPN server (VPN server 160 already exists). Instead, the VPN server VM 150 creates and provides the second IP address configuration 121 to the second VM 120.

The VPN server 160 provides a subnetwork through which the first VM 110 and the second VM 120 can communicate within the network 180 using the first IP address configuration 111 and the second IP address configuration 121.

Further, a (unlimited) number of network interfaces can be provided by the VPN server VM 150 to the individual VMs 110, 120. The first VM 110 starts a VPN client 116 using the first IP address configuration 111 (file). Based on the first IP address configuration 111, the VPN server VM 150 creates a first network interface (here an ethernet adapter) 112 for the first VM 110. The second VM 120 starts a further VPN client 126 using the second IP address configuration 121. Based on the second IP address configuration 121, the VPN server VM 150 creates a second network interface (here an ethernet adapter) 122 for the second VM 120.

The method described above can also be described in other words for an exemplary embodiment as outlined in the following.

The system supports different users and users can create different workspaces. A workspace can contain different projects and a project can contain a list of VMs to be executed, for example each VM with own operating system, programs, data, configuration, and different IP addressing. The system can isolate a project from another project. This means that several projects can contain identical IP addressing schemes without collision between projects.

A user launches a project to a selected cloud network and the system 100 creates all configured virtual machines 110, 120 and a new virtual machine for same environment called VM.VPN.Server 150. VM.VPN.Server 150 is a virtual machine with an internal agent/daemon (agentVPN) installed that receives requests from individual virtual machines 110, 120. The VM.VPN.Server 150 agent/daemon can read individual VM requests for new IP assignment. When a new IP address request is received (if the corresponding subnetwork was not registered before), a new VPN Server 160 for said subnetwork is executed on a free TCP port. The agentVPN daemon on VM.VPN.Server 150 creates a new VPN client 116 configuration file on demand to be connected to the correct VPN Server 160 by the IP subnetwork needed. A single VPN server 160 is executed on a free port by each IP subnetwork 140. A single VPN client connection file 116, 126 is created based on the IP address required to connect to VPN server 160 to create a new TAPx (network interface 112, 122) on VM 110, 120 with requested IP address.

When an individual virtual machine 110, 120 starts, the software can request as many IP addresses to agent/daemon as needed in configuration 111, 121. For each IP address needed, the software starts an VPN client 116, 126 connection to a VPN server 160 assigned by the respective subnetwork automatically. VMs use the received VPN file to establish a VPN connection. The agent/daemon configures and starts as many VPN servers 160, 161 as requested (one VPN server 160, 161 per subnetwork 140, 141) using different network ports, on demand.

With this process, each virtual machine has the number of network interfaces needed (TAP adapters) and with the IP address requested. Communication between different virtual machines 110, 120 using needed IP addressing is performed across all VPN servers 160 launched transparently to applications.

In the example of Figure 1, two virtual machines (VM.1, VM.2) and IP configured addresses VM.1 (10.34.91.1/24) and VM.2 (10.34.91.2/24) are used. This process can be expanded to any number of VMs and any IP address scheme. In an exemplary embodiment, the open software "OpenVPN" with license GNU GPL is used to start VPN servers and clients to allow as many IP addresses as needed between the VM in the project.

**Figure 2** shows a specific application of the VM managing method, according to an exemplary embodiment of the invention. A plurality of software A, B, C are to be tested. Before the test in a real environment, a test in a virtual environment is performed. For example, the communication of VMs between each other is to be tested. Such a virtual environment can be a network as described for Figure 1 above, e.g. a virtual private cloud (e.g. a commercial VPC such as AWS). However, as described above, such a network may have a predefined IP addressing scheme, so that communication in the network between VMs that have another IP addressing scheme is not possible (even so it is to be tested). The method (e.g. as described for Figure 1) of managing VMs enables such a communication in subnetworks using the VPN server VM 150 and the IP addresses of the VMs do not have to be changed (this can be an important requirement for the test).

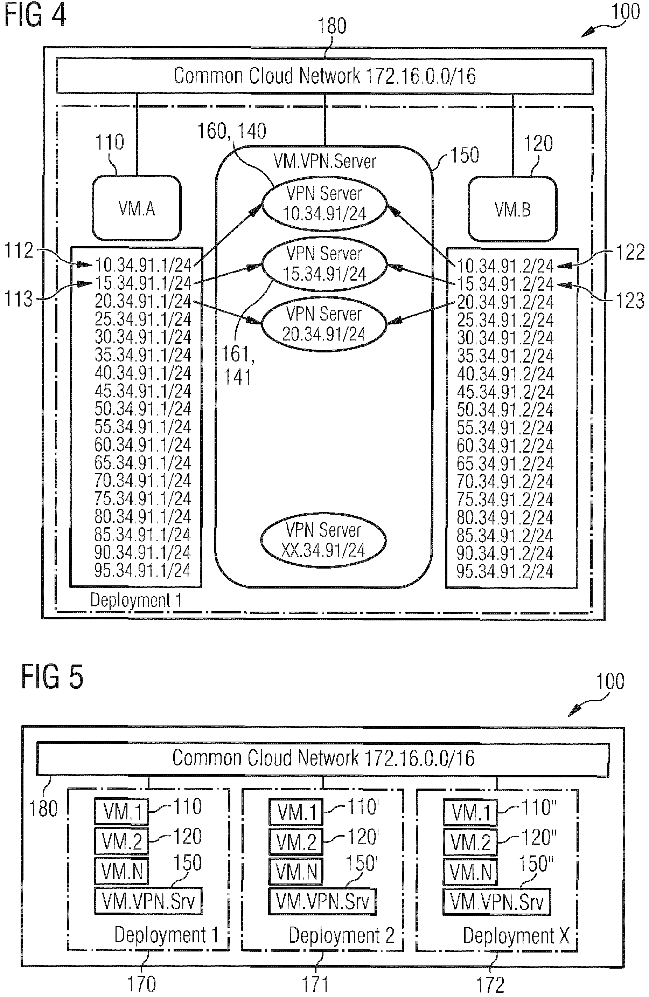

**Figure 4** shows a VM network 180 with a plurality of subnetworks 140, 141 provided by the VPN server VM 150, according to an exemplary embodiment of the invention. It is schematically shown that the first VM 110 and the second VM 120 are both connected to the common cloud network 180 that comprises a predefined IP addressing scheme (172.16.0.0). It is further schematically shown that the first VM 110 comprises a plurality of IP addresses with a different IP addressing scheme and that the second VM 120 comprises a further plurality of IP addresses with corresponding IP addressing schemes.

The VPN server VM 150 is also connected to the network 180 and provides (upon request) a dedicated VPN server 160, 161 for each IP addressing scheme of the VMs 110, 120. A first VPN server 160 enables a first subnetwork 140 for communication between the first IP configuration 111 (at a first network interface 112) of the first VM 110 and the second IP configuration 121 (at a second network interface 122) of the second VM 120. Further, a second VPN server 161 enables a second subnetwork 141 for communication between the further first IP configuration (at a further first network interface 113) of the first VM 110 and the further second IP configuration (at a further second network interface 123) of the second VM 120.

As shown by Figure 4, the described method may allow any IP addressing and number of network interfaces.

**Figure 5** shows a VM network 180 with deployments, according to an exemplary embodiment of the invention. The deployments are like clusters to distribute projects/workload within the network 180. The first deployment 170 is configured for example as described for Figures 1 and 4. The second deployment 171 can be configured in a comparable manner, e.g. comprising a further first VM 110', a further second VM 120', and a further VPN server VM 150'. The same can hold true for a third deployment 172. Hereby, each deployment 170, 171, 172, comprises its own VPN server VM 150, 150', 150". Figure 5 shows e.g. different projects on common cloud network 180 with different or identical IP addressing. In other words, the IP address in the different deployments may be at least partially similar.

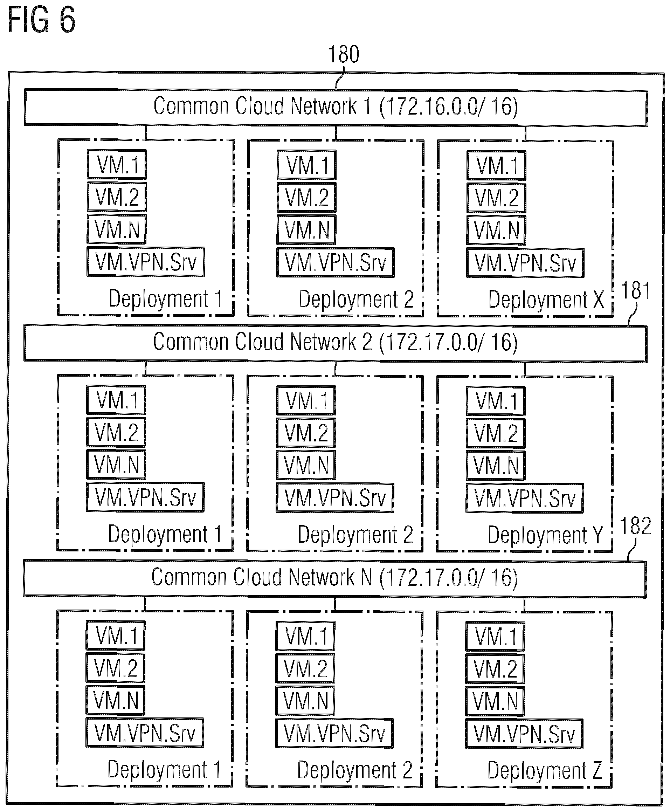

**Figure 6** shows a plurality of VM networks 180, 181, 182 with respective deployments, according to an exemplary embodiment of the invention. Such different common cloud networks can be used to have a high scalable system. The system can access several common cloud networks for launching different deployments to be a high scalable system.

It should be noted that the term "comprising" does not exclude other elements or steps, and the use of the article "a" does not preclude a multitude. Elements that are described in connection with different embodiments can also be combined. It should also be noted that reference signs in the claims should not be interpreted as limiting the scope of the claims.

Regardless of the grammatical gender of a particular term, it includes people with male, female or other gender identities.

### Reference signs

- 100: Virtual machine (VM) system
- 101: Hypervisor
- 110: First VM
- 111: First IP address configuration
- 112: First network interface
- 113: Further first network interface
- 114: Start first VM
- 115: First IP address configuration request
- 116: Start first VPN client
- 120: Second VM
- 121: Second IP address configuration
- 122: Second network interface
- 123: Further second network interface
- 124: Start second VM
- 125: Second IP address configuration request
- 126: Start second VPN client
- 140: First subnetwork
- 141: Second subnetwork
- 150: VPN server VM
- 155: Start VPN server VM
- 160: VPN server, first subnetwork
- 161: Further VPN server, second subnetwork
- 170: First deployment
- 171: Second deployment
- 172: Third deployment
- 180: Network, first network
- 181: Further network, second network
- 182: Third network

## Claims

1. A method of managing a virtual machine, VM, system (100) that comprises a network (180), the method comprising:
providing a first VM (110) and a second VM (120);
providing a virtual private network, VPN, server VM (150); and
providing, by the VPN server VM (150), a subnetwork (140) for communication between the first VM (110) and the second VM (120).

2. The method according to claim 1,
wherein the network (180) comprises a network IP addressing scheme, and
wherein the network IP addressing scheme is different from the IP addressing scheme of the first VM (110) and the second VM (120) in the subnetwork (140).

3. The method according to claim 1 or 2, further comprising:
providing, in particular upon request (115), by the VPN server VM (150), a first IP address configuration (111) to the first VM (110); and
providing, in particular upon request (125), by the VPN server VM (150), a second IP address configuration (121) to the second VM (120);
wherein communicating between the first VM (110) and the second VM (120) via the subnetwork (140) within the network (180) is based on the first IP address configuration (111) and the second IP address configuration (121).

4. The method according to one of the preceding claims, further comprising:
providing, by the VPN server VM (150), at least one first network interface (112) for the first VM (110); and/or
providing, by the VPN server VM (150), at least one second network interface (122) for the second VM (120).

5. The method according to claim 4,
wherein providing the first network interface (112) is based on the first IP address configuration (111); and/or
wherein providing the second network interface (122) is based on the second IP address configuration (121).

6. The method according to one of the preceding claims, further comprising:
providing, by the VPN server VM (150), a VPN server (160); and
communicating between the first VM (110) and the second VM (120) via the VPN server (160) in the subnetwork (140) of the network (180).

7. The method according to one of the claims 3 to 6, further comprising:
providing, by the VPN server VM (150), at least one further first network interface (113) for the first VM (110);
providing, by the VPN server VM (150), at least one further second network interface (123) for the second VM (120);
providing, by the VPN server VM (150), a further VPN server (161); and
communicating between the further first network interface (113) and the further second network interface (123) via the further VPN server (161) in a further subnetwork (141) of the network (180).

8. The method according to one of the claims 3 to 7,
wherein the first network interface (112) comprises the first IP address, in particular a first IP addressing scheme, and wherein the further first network interface (113) comprises a further first IP address, in particular a further IP addressing scheme, being different from the first IP address; and/or
wherein the second network interface (122) comprises the second IP address, in particular a second IP addressing scheme, and wherein the further second network interface (123) comprises a further second IP address, in particular a further second IP addressing scheme, being different from the second IP address.

9. The method according to one of the preceding claims,
wherein the first VM (110) comprises the first IP address and a further first IP address, wherein the second VM (110) comprises the second IP address and a further second IP address,
wherein the first IP address and the second IP address have the same IP addressing scheme,
wherein the further first IP address and the further second IP address have the same further IP addressing scheme; and
wherein the IP addressing scheme is different from the further IP addressing scheme.

10. The method according to one of the preceding claims, further comprising:
starting a first VPN client (116) at the first VM (110) based on the first IP address configuration (111); and/or
starting a second VPN client (126) at the second VM (120) based on the second IP address configuration (121).

11. The method according to one of the preceding claims, further comprising:
providing a first deployment (170) in the network (180), wherein the first deployment comprises the first VM (110), the second VM (120), and the VPN server VM (150); and
providing a second deployment (171) in the network (180), wherein the second deployment comprises a further first VM (110'), a further second VM (120'), and a further VPN server VM (150');
in particular wherein the IP addresses used in the first deployment (170) and in the second deployment (171) are at least partially similar.

12. The method according to one of the preceding claims, further comprising:
providing a further network (181), in particular providing a further first deployment and a further second deployment in the further network (181).

13. The method according to one of the preceding claims, further comprising at least one of the following features:
the network (180) is a cloud network, in particular a virtual private cloud, VPC;
the network (180) is a VLAN communication network;
the network (180) is a level 3 network;
wherein the network (180) is an IP network;
further comprising starting a new VPN server (161) at a free network port, in particular a free TCP port;
the VPN server VM (150) applies a commonly available VPN software;
the network interface (112) is an ethernet adapter;
the first VM (110) comprises the first IP address, and said first IP address remains unchanged;
the second VM (120) comprises the second IP address, and said second VM address remains unchanged.

14. A virtual machine, VM, system (100), comprising at least one processor, configured to perform the method according to one of the preceding claims.

15. Using a virtual private network, VPN, server virtual machine, VM (150) to provide a subnetwork (140) within a network (180) between a first VM (110) and a second VM (120), in particular wherein the network (180) comprises a network IP addressing scheme, and wherein the network IP addressing scheme is different from the IP addressing scheme of the first VM (110) and the second VM (120).
